# EUROPÄISCHE PATENTSCHRIFT

(11) **EP 3 557 197 B1**
(45) Veröffentlichungstag und Bekanntmachung des Hinweises auf die Patenterteilung: **07.06.2023**
(21) Anmeldenummer: 19169659.0
(22) Anmeldetag: 16.04.2019
(51) Int. Cl.: G01G 13/02

(54) **DOSIEREINRICHTUNG FÜR SCHÜTTGUT, WAAGENANORDNUNG UND DOSIERVERFAHREN**
DOSING DEVICE FOR BULK MATERIAL, SCALE ASSEMBLY AND METERING METHOD
DISPOSITIF DE DOSAGE POUR MATIÈRE EN VRAC, AGENCEMENT DE PESAGE ET PROCÉDÉ DE DOSAGE

(30) Priorität: 17.04.2018 DE 102018109116
(43) Veröffentlichungstag der Anmeldung: 23.10.2019
(73) Patentinhaber: Weber Waagenbau und Wägeelektronik Gesellschaft mit beschränkter Haftung, 68753 Waghäusel (DE)
(72) Erfinder: Weber, Christian, 68753 Waghäusel (DE); Weber, Michael, 68753 Waghäusel (DE); Weber, Erich, 68753 Waghäusel (DE)
(74) Vertreter: Witte, Weller & Partner Patentanwälte mbB

(56) Entgegenhaltungen:
- JP-A- H0 396 821
- US-A- 2 579 527

## Beschreibung

Die vorliegende Erfindung betrifft eine Dosiereinrichtung zum Dosieren von Schüttgut, insbesondere für eine Waagenanordnung, mit einem Dosiereinrichtungsgehäuse, mit einer Dosierwalze, die drehbar an dem Dosiereinrichtungsgehäuse gelagert und in wenigstens einer Drehrichtung antreibbar ist, und mit einem Schüttgutauslass.

Ferner betrifft die vorliegende Erfindung eine Waagenanordnung mit einer derartigen Dosiereinrichtung sowie ein Verfahren zum Dosieren von Schüttgut mittels einer solchen Dosiereinrichtung.

Es ist im Stand der Technik bekannt, Schüttgut in Behälter oder Säcke abzufüllen und dabei das Füllgewicht mittels einer Waage zu messen. Zum Zuführen von Schüttgut in den Behälter oder Sack dient dabei häufig eine Dosiereinrichtung. Die Dosiereinrichtung ermöglicht es, Schüttgut bedarfsweise zuzuführen, und zwar vorzugsweise so genau, dass ein gewünschtes Füllgewicht in dem Behälter genau erreicht werden kann. Nach Beenden des Dosiervorganges wird der Behälter entleert oder das befüllte Gebinde verschlossen und abtransportiert.

Schüttgut ist ein pulvriges, körniges oder auch stückiges Gemenge, das in einer schüttfähigen Form vorliegt. Bestimmt werden die Eigenschaften von Schüttgut durch die Korngröße bzw. Partikelgröße (Körnung) und die Kornverteilung sowie die Schüttdichte, die Rauheit, die Feuchtigkeit und die Temperatur. Unterschieden werden kohäsionslose (frei fließende) und kohäsive (zusammenhaltende) Schüttgüter (Wikipedia, GND:
4053404-2 vom 16. April 2018).

Das Schüttgut kann ein chemisches Granulat sein, wie Düngemittel. Das Schüttgut kann jedoch auch durch Nahrungsmittel gebildet sein, beispielsweise Mehl oder Ähnliches.

Im Stand der Technik ist es bekannt, eine Bürstenwalze dazu zu verwenden, um derartiges Schüttgut zu dosieren. Das Schüttgut wird dabei in eine Schüttgutaufnahme eingefüllt, innerhalb der auch die Bürstenwalze angeordnet ist. Die Bürstenwalze ist einem Dosierauslass zugeordnet. Bei einem Antrieb der Bürstenwalze wird Schüttgut hin zu dem Dosierauslass gefördert, über den das Schüttgut dann einem Behälter oder einem Sack zugeführt wird. Nachteilig ist bei dieser Lösung, dass sich einzelne Borsten der Bürstenwalze lösen können und damit dem dosierten Schüttgut beigemischt werden.

Das Dokument JP H03 96821 A offenbart eine Dosiereinrichtung mit einer Dosierwalze, die Umfangsnuten hat. Das Dokument US 2 579 527 betrifft eine Dosiereinrichtung mit einer Walze, die eine Vielzahl von radial abstehenden Dornen hat.

Es ist vor diesem Hintergrund eine Aufgabe der Erfindung, eine verbesserte Dosiereinrichtung, eine verbesserte Waagenanordnung und ein verbessertes Dosierverfahren anzugeben.

Die obige Aufgabe wird gelöst durch eine Dosiereinrichtung mit den Merkmalen des Anspruchs 1. Die Dosiereinrichtung dient zum Dosieren von Schüttgut und kann vorteilhafterweise in Verbindung mit einer Waagenanordnung verwendet werden. Die Dosiereinrichtung muss jedoch nicht zwangsläufig in Kombination mit einer derartigen Waagenanordnung verwendet werden, sondern kann auch unabhängig hiervon verwendet werden, oder in Verbindung mit anderen Messeinrichtungen, wie Volumenmesseinrichtungen, etc..

Die erfindungsgemäße Dosiereinrichtung beinhaltet ein Dosiereinrichtungsgehäuse, eine Dosierwalze, die drehbar an dem Dosiereinrichtungsgehäuse gelagert und in wenigstens einer Drehrichtung antreibbar ist, sowie einen Begrenzungsabschnitt, der die Dosierwalze zumindest teilweise umgibt und an dem ein Schüttgutauslass ausgebildet ist. Dabei weist die Dosierwalze eine Mehrzahl von Umfangsnuten auf, wobei zwischen zwei Umfangsnuten ein Umfangssteg ausgebildet ist.

Ferner wird die obige Aufgabe gelöst durch eine Waagenanordnung mit einer erfindungsgemäßen Dosiereinrichtung, wobei die Dosierwalze und der Begrenzungsabschnitt vorzugsweise in einem Schüttgutaufnahmeraum des Dosiereinrichtungsgehäuses angeordnet sind.

Schließlich wird die obige Aufgabe gelöst durch ein Verfahren zum Dosieren von Schüttgut mittels einer erfindungsgemäßen Dosiereinrichtung, mit dem Schritt, die Dosierwalze in Bezug auf den Begrenzungsabschnitt zu verdrehen, so dass Schüttgut in Richtung hin zu dem Schüttgutauslass gefördert wird.

Die Dosierwalze ist mit einer Mehrzahl von Umfangsnuten ausgebildet, zwischen denen ein Umfangssteg ausgebildet ist.

Es hat sich gezeigt, dass bei einem Verdrehen der Dosierwalze mit solchen Umfangsnuten das Schüttgut über die Umfangsnuten in Umfangsrichtung gefördert werden kann, um es einem Schüttgutauslass zuzuführen. Durch den Begrenzungsabschnitt, der die Dosierwalze zumindest teilweise umgibt, wird dabei eine Art Förderraum zwischen den Wandungen der Umfangsnuten und dem Begrenzungsabschnitt gebildet. Hierdurch kann das Schüttgut zumindest in dem Bereich, über den der Begrenzungsabschnitt die Dosierwalze umgibt, eine Förderwirkung in Umfangsrichtung innerhalb der Umfangsnuten realisiert werden. Das Schüttgut ist dabei vorzugsweise nicht vollkommen frei fließend, so dass die gewünschte Förderwirkung erreicht werden kann.

Die Tiefe der Umfangsnuten ist vorzugsweise um ein Mehrfaches größer als ein Abstand zwischen dem Außenumfang der Dosierwalze und dem Begrenzungsabschnitt. Typischerweise kann die Größe der Vertiefungen in einem Bereich von 1 mm bis 100 mm liegen, um ein Beispiel zu nennen. Die Tiefe und der Querschnitt der Umfangsnuten ist dabei vorzugsweise eine Funktion der Art des Schüttgutes, insbesondere von dessen Korngröße und von dessen Fließ- und/oder Rieselfähigkeit.

Die Dosierwalze ist erfindungsgemäß an ihrer dem Begrenzungsabschnitt zuweisenden Oberfläche als einstückige Dosierwalze ausgebildet (sie kann als Vollwalze ausgebildet sein oder als Hohlwalze, der Umfangsabschnitt jedenfalls ist durchgehend einstückig). Daher kann vermieden werden, dass Teile der Dosierwalze in das dosierte Schüttgut gelangen.

Als Materialien für die Dosierwalze bzw. deren Umfangsabschnitt bieten sich Stahl, Edelstahl, Aluminium, aber auch Kunststoffe (PTFE, PA oder dergleichen) an. Ferner ist es möglich, die Oberfläche der Dosierwalze zu beschichten oder zu bearbeiten. Beispielsweise kann die Oberfläche auf eine gewünschte Rauigkeit bearbeitet werden. Ferner kann die Oberfläche mit einer die Reibung herabsetzenden Beschichtung versehen sein, wie beispielsweise PTFE, etc..

Vorzugsweise weist die Dosierwalze eine axiale Länge auf und weist eine Anzahl von Umfangsnuten auf, die in einem Bereich von 2 bis 30 liegt, vorzugsweise in einem Bereich von 3 bis 25, insbesondere in einem Bereich von 5 bis 20. Ein Verhältnis zwischen einem Außenradius der Dosierwalze zu einer radialen Tiefe der Umfangsnuten liegt vorzugsweise in einem Bereich von 25:1 bis 3:1, vorzugsweise in einem Bereich von 20:1 bis 5:1, insbesondere in einem Bereich von 15:1 bis 6:1.

Die Waagenanordnung weist vorzugsweise ein Waagengehäuse auf, innerhalb dessen eine Waage für einen Behälter oder einen Sack oder dergleichen angeordnet ist. Die Dosiereinrichtung ist vorzugsweise im Bereich eines oberen Abschnittes des Gehäuses angeordnet, derart, dass Schüttgut über den Schüttgutauslass in den Behälter bzw. Sack dosiert werden kann. Mit einem derartigen System kann das Schüttgut bedarfsgerecht in den Behälter bzw. den Sack dosiert werden, bis ein gewünschtes Füllgewicht erreicht ist.

Die Aufgabe wird somit vollkommen gelöst.

Gemäß einer bevorzugten Ausführungsform ist an dem Umfangssteg eine Vielzahl von über einen Umfangsabschnitt der Dosierwalze verteilt angeordneten Fördermerkmalen ausgebildet.

Vorzugsweise sind die Fördermerkmale über den gesamten Umfang des Umfangssteges ausgebildet. Die Fördermerkmale sind so realisiert, dass sie einstückig mit der Dosierwalze ausgebildet sind. Die Fördermerkmale unterstützen ein Fördern von Schüttgut bei einer Drehung der Dosierwalze.

Besonders bevorzugt ist es, wenn die Fördermerkmale durch eine Mehrzahl von über den Umfangsabschnitt der Dosierwalze verteilt angeordneten radialen Fördervertiefungen ausgebildet sind, zwischen denen jeweils Fördernocken ausgebildet sind.

Hierdurch kann bei einer Drehung der Walze Schüttgut innerhalb der Fördervertiefungen verbleiben, das dann in Umfangsrichtung gefördert wird. Die Fördervertiefungen sind dabei im Bereich des Begrenzungsabschnittes durch den Begrenzungsabschnitt quasi "verschlossen".

Die Fördervertiefungen von benachbarten Umfangsstegen können in Umfangsrichtung miteinander ausgerichtet sein, so dass sie in axialer Richtung gesehen unmittelbar hintereinander liegen.

Von besonderem Vorzug ist es jedoch, wenn die über den Umfangsabschnitt der Dosierwalze verteilt angeordneten Fördermerkmale eines ersten und eines zweiten axial benachbarten Umfangsstegs in Umfangsrichtung versetzt zueinander angeordnet sind.

Hierdurch kann die Fördereffizienz gesteigert werden.

Von besonderem Vorzug ist es dann, wenn die Fördervertiefungen des ersten Umfangsstegs in Umfangsrichtung mit Fördernocken des zweiten, benachbarten Umfangsstegs ausgerichtet sind.

Hierdurch ergibt sich in der Draufsicht auf die Dosierwalze eine Art Schachbrettmuster.

Die Fördervertiefungen können eine radiale Tiefe haben, die größer ist oder die kleiner ist als die radiale Tiefe der Umfangsnuten. Vorzugsweise ist die radiale Tiefe der Fördervertiefungen kleiner gleich der radialen Tiefe der Umfangsnuten, und ist besonders bevorzugt gleich der radialen Tiefe der Umfangsnuten.

Die Herstellbarkeit und die Wartungsfreundlichkeit können hierdurch verbessert werden.

Gemäß einer weiteren insgesamt bevorzugten Ausführungsform ist an dem Begrenzungsabschnitt eine Abstreifeinrichtung angeordnet, die dazu ausgebildet ist, Schüttgut aus wenigstens einer Umfangsnut abzustreifen, so dass es dem Schüttgutauslass zugeführt wird.

Die Abstreifeinrichtung ist dabei vorzugsweise starr in Bezug auf das Dosiereinrichtungsgehäuse montiert und ist vorzugsweise aus einem festen Material, wie einem Blechmaterial, einem Kunststoffmaterial oder dergleichen gebildet. Vorzugsweise ist die Abtreifeinrichtung als einstückiges Bauteil ausgebildet.

Besonders bevorzugt ist es, wenn die Abstreifeinrichtung wenigstens einen Abstreifzinken aufweist, der in die Umfangsnut eingreift.

Der Abstreifzinken weist vorzugsweise eine Querschnittsform auf, die an die Querschnittsform der zugeordneten Umfangsnut angepasst ist.

Vorzugsweise ist der Abstreifzinken im Querschnitt rechteckförmig ausgebildet.

Gemäß einer weiteren bevorzugten Ausführungsform ist der Dosierwalze ein Räummechanismus zugeordnet, der dazu ausgebildet ist, Schüttgut aus den Fördermerkmalen zu entfernen.

Der Räummechanismus kann dabei in Umfangsrichtung gesehen versetzt gegenüber dem Begrenzungsabschnitt angeordnet sein. Der Räummechanismus dient dazu, die Fördermerkmale, die von der Abstreifeinrichtung vorzugsweise nicht unmittelbar beeinflusst werden, bedarfsweise auszuräumen. Hierdurch kann verhindert werden, dass Schüttgut über längere Zeit in den Fördermerkmalen verbleibt.

Der Räummechanismus kann dabei insbesondere eine Bewegung in axialer Richtung durchführen, die der Breite eines Umfangsstegs und benachbarter Fördervertiefungen entspricht.

Mit anderen Worten kann der Räummechanismus beispielsweise durch einen Räumkamm gebildet sein, der ähnlich aussieht wie die Abstreifeinrichtung. Der Räummechanismus kann außerhalb des Begrenzungsabschnittes angeordnet sein, ist jedoch vorzugsweise innerhalb des Begrenzungsabschnittes angeordnet und vorzugsweise so angeordnet, dass von dem Räummechanismus aus der Dosierwalze entferntes Schüttgut dem zugeordneten Schüttgutauslass (insbesondere Feinstromauslass) zugeführt wird. Der Räummechanismus ist vorzugsweise in einer Richtung parallel zu der Drehachse der Dosierwalze bewegbar.

Von besonderem Vorzug ist es dabei, wenn der Räummechanismus synchron zu einer Verdrehung der Dosierwalze angesteuert ist.

Beispielsweise können Räumzinken des Räummechanismus ständig in die Umfangsnut greifen. Bei stehender Dosierwalze kann dann eine axiale Bewegung des Räummechanismus erfolgen, so dass Fördermerkmale von Schüttgut befreit werden. Anschließend werden die Räumzinken wieder mit den Umfangsnuten ausgerichtet, die Dosierwalze wird um einen "Schritt" weiter bewegt, so dass der Räummechanismus anschließend mit den Fördermerkmalen von benachbarten Umfangsnuten ausgerichtet ist, usw. Alternativ hierzu ist es möglich, zum Räumen die Walze kontinuierlich drehen zu lassen und den Räummechanismus synchron zur Drehzahl zu koppeln. In diesem Fall führt der Räummechanismus bezogen auf eine Umfangsrichtung schlangenförmige bzw. sinusförmige Bewegungen durch, deren Amplitudenspitzen jeweils in die Fördervertiefungen hineinreichen und sich dazwischen über eine Umfangsnut hinweg erstrecken.

Gemäß einer weiteren bevorzugten Ausführungsform weist das Schüttgut eine maximale Partikelgröße bzw. Korngröße auf, wobei ein Abstand zwischen dem Begrenzungsabschnitt und einem Außenumfang der Dosierwalze vorzugsweise größer ist als die maximale Partikelgröße.

Gemäß einer weiteren bevorzugten Ausführungsform ist eine Drehzahl der Dosierwalze variabel einstellbar. Hierdurch kann ein Dosiervorgang bedarfsgerecht erfolgen, indem die Dosierwalze zum Beispiel zu Beginn eines Dosiervorganges schneller gedreht wird, um mehr Schüttgut pro Zeiteinheit zu dosieren. Zum Ende eines Dosiervorganges kann die Dosierwalze langsamer angetrieben werden, um die Dosierleistung zu verringern und feinfühlig dosieren zu können. Zum Ende eines Dosiervorganges kann die Dosierwalze angehalten werden.

Die Einstellung der Dosierwalzendrehzahl erfolgt dabei vorzugsweise automatisiert.

Gemäß einer besonders bevorzugten Ausführungsform erfolgt die Einstellung der Drehzahl der Dosierwalze als eine Funktion eines Gewichtes und/oder einer Menge und/oder eines Volumenstromes an dosiertem Schüttgut.

Generell ist es denkbar, dass die Dosiereinrichtung nur einen Schüttgutauslass aufweist, über den mittels der Dosierwalze gefördertes Schüttgut dem Schüttgutauslass zugeführt wird.

Gemäß einer bevorzugten Ausführungsform weist die Dosiereinrichtung jedoch einen weiteren Schüttgutauslass auf, über den Schüttgut unter Umgehung der Dosierwalze und des Begrenzungsabschnittes gesteuert abgebbar ist.

Der weitere Schüttgutauslass weist dabei vorzugsweise einen Verschluss auf, wie einen Schieber oder dergleichen. Über den weiteren Schüttgutauslass kann eine Grobdosierung erfolgen, um beispielsweise einen Behälter oder einen Sack zu einem Großteil zu befüllen. Der Querschnitt des weiteren Schüttgutauslasses kann dabei insbesondere größer sein als jener des Schüttgutauslasses, der der Dosierwalze zugeordnet ist.

Erst dann, wenn eine Feindosierung erforderlich ist, also zum Ende eines Dosiervorganges, kann der weitere Schüttgutauslass verschlossen werden, um dann ausschließlich Schüttgut über den der Dosierwalze zugeordneten Schüttgutauslass dem Behälter bzw. dem Sack zuzuführen.

Generell ist es ferner bevorzugt, wenn man eine Rütteleinrichtung dazu ausbildet, Schüttgut von der Dosierwalze zu lösen.

Hierbei ist es möglich, die Rütteleinrichtung als Vibrationseinrichtung auszubilden, die beispielsweise an dem Dosiereinrichtungsgehäuse angreift. In einer alternativen Ausführungsform kann die Dosierwalze hochfrequent angesteuert werden, so dass sie schnelle Vor- und Zurückbewegungen vollzieht, also selber eine Rüttelfunktion erzeugt, so dass Schüttgut von der Dosierwalze gelöst werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Darstellung einer erfindungsgemäßen Waagenanordnung mit einer Ausführungsform einer erfindungsgemäßen Dosiereinrichtung;
- Fig. 2: eine schematische Querschnittsansicht einer Dosiereinrichtung gemäß einer Ausführungsform der Erfindung;
- Fig. 3: eine schematische Längsschnittansicht durch eine Dosierwalze der Dosiereinrichtung der Fig. 2; und
- Fig. 4: eine Draufsicht auf eine Ausführungsform einer erfindungsgemäßen Dosiereinrichtung.

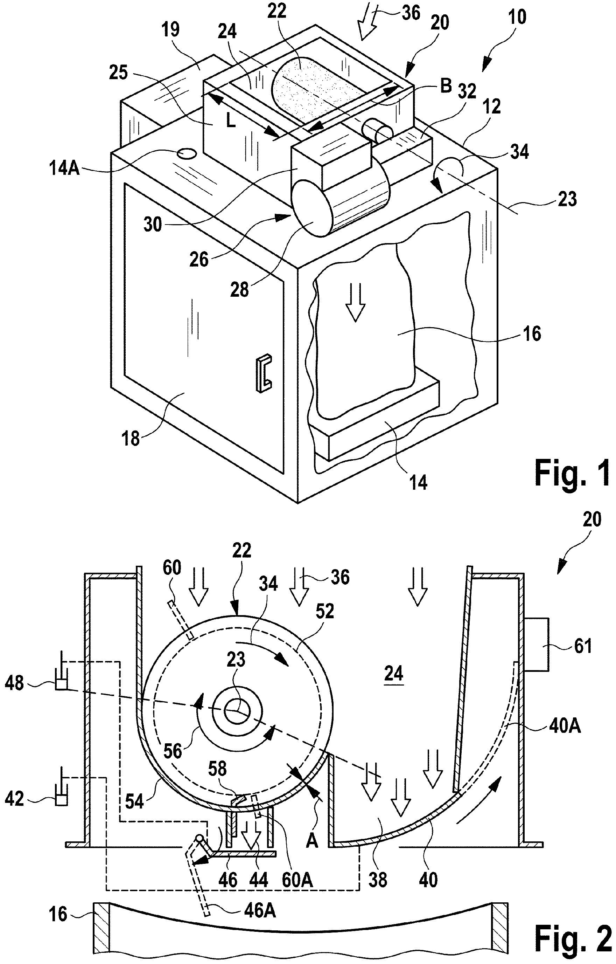

In Fig. 1 ist eine Waagenanordnung generell dargestellt und mit 10 bezeichnet.

Die Waagenanordnung 10 beinhaltet ein Gehäuse 12, das vorliegend etwa quaderförmig oder würfelförmig sein kann. Innerhalb des Gehäuses 12 kann am Boden eine Waage 14 aufgenommen sein, auf die innerhalb des Gehäuses 12 ein Behälter oder ein Sack 16 gestellt werden kann. In der Regel weist das Gehäuse 12 jedoch im Bereich einer Oberseite eine Mehrzahl von Wägezellen auf, wie es schematisch in Fig. 1 bei 14A angedeutet ist. An den Wägezellen wird entweder ein Wägebehälter aufgehängt, in den Schüttgut dosiert wird und aus dem heraus das Schüttgut dann in einem weiteren Schritt in einen Sack oder dergleichen abgefüllt wird (Netto-Wägeprinzip). Alternativ hierzu kann an den Wägezellen 14A direkt ein Übergangstrichter aufgehängt sein, an dem ein Sack befestigt ist, so dass Schüttgut über den Übergangstrichter direkt in den Sack gefüllt wird (Brutto-Wägeprinzip). Zu diesen Zwecken weist das Gehäuse 12 eine Tür 18 auf.

An einer Seite des Gehäuses 12 ist ein Anschlusskasten 19 ausgebildet, an dem Stromanschlüsse, gegebenenfalls Pneumatikversorgungsanschlüsse etc. ausgebildet sind.

Die Waagenanordnung 10 weist auf einer Oberseite des Gehäuses 12 eine Dosiereinrichtung 20 auf. Die Dosiereinrichtung 20 weist eine Dosierwalze 22 auf, die innerhalb einer nach oben offenen Schüttgutaufnahme 24 angeordnet ist. Die Schüttgutaufnahme weist eine Länge L und eine Breite B auf. Die Länge L entspricht einer axialen Länge der Dosierwalze 22.

Generell beinhaltet die Dosiereinrichtung 20 ein Dosiereinrichtungsgehäuse 25, innerhalb dessen die nach oben offene Schüttgutaufnahme 24 ausgebildet ist. An einer Außenseite des Dosiereinrichtungsgehäuses 25 ist ein Dosierwalzenantrieb 26 angeordnet.

Der Dosierwalzenantrieb 26 weist einen Elektromotor 28 auf, dem eine Leistungselektronik 30 zugeordnet ist. Der Elektromotor 28 ist über ein Getriebe 32, das vorliegend insbesondere als Winkelgetriebe ausgebildet ist, mit der Dosierwalze 22 verbunden. Die Dosierwalze 22 ist zu diesem Zweck drehbar über geeignete Lager an dem Dosiereinrichtungsgehäuse 25 gelagert, wobei sich eine Antriebswelle (nicht näher bezeichnet) der Dosierwalze 22 seitlich aus dem Dosiereinrichtungsgehäuse 25 heraus erstreckt, wo sie mit dem Getriebe 32 verbunden ist.

Die Dosierwalze 22 wird zum Dosieren in einer Drehrichtung 34 angetrieben. Schüttgut 36 kann von oben in die Schüttgutaufnahme 24 eingefüllt werden.

Wie es in Fig. 2 dargestellt ist, ist die Schüttgutaufnahme 24 in horizontaler Richtung im Wesentlichen in zwei Abschnitte unterteilt. In dem einen Abschnitt ist die Dosierwalze 22 angeordnet. In einem horizontal daneben liegenden Abschnitt kann Schüttgut 36 an der Dosierwalze 22 vorbei hin zu einem Grobstromauslass 38 geführt werden. Der Grobstromauslass 38 ist durch einen Grobstromverschluss 40 verschließbar. In Fig. 2 ist der Grobstromauslass 38 durch den Grobstromverschluss 40 verschlossen. Eine geöffnete Position des Grobstromverschlusses ist bei 40A schematisch angedeutet, in die der Grobstromverschluss 40 entlang eines Pfeils verschwenkt wird.

Unterhalb der Dosierwalze 22 ist ein Feinstromauslass 44 vorgesehen. Der Feinstromauslass 44 ist mittels eines Feinstromverschlusses 46 verschließbar. In Fig. 1 ist der Feinstromauslass 44 in der geschlossenen Position gezeigt. Die geöffnete Position des Feinstromverschlusses ist in Fig. 2 schematisch bei 46A gestrichelt angedeutet. Die hierzu einzuleitende Bewegungsrichtung ist ebenfalls durch einen Pfeil gekennzeichnet.

Dem Grobstromverschluss 40 ist ein Grobstromverschluss-Aktuator 42 zugeordnet. Dem Feinstromverschluss 46 ist ein Feinstromverschluss-Aktuator 48 zugeordnet. Die Aktuatoren 42, 48 können insbesondere pneumatische Aktuatoren sein, die vorzugsweise außerhalb des Dosiereinrichtungsgehäuses 25 angeordnet sind und über geeignete Getriebe, Hebel oder dergleichen mit den jeweiligen Verschlüssen 40, 46 verbunden sind.

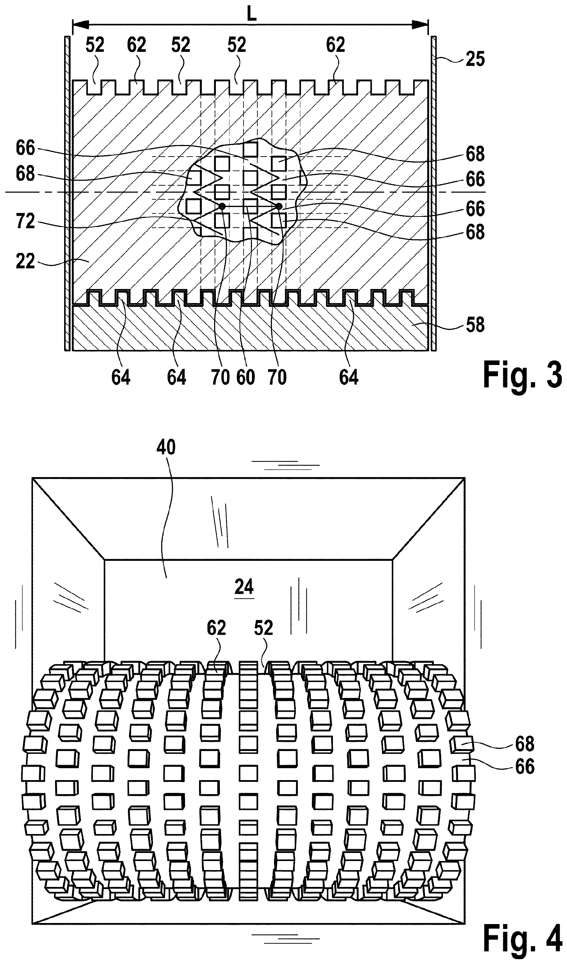

Die Dosierwalze 22 weist, wie es in Fig. 2 und Fig. 3 zu erkennen ist, eine Mehrzahl von Umfangsnuten 52 auf, die in axialer Richtung nebeneinander angeordnet sind. Ferner ist die Dosierwalze 22 über einen unteren Umfangsabschnitt von einem Begrenzungsabschnitt 54 umgeben. Der Begrenzungsabschnitt 54 ist durch das Dosiereinrichtungsgehäuse 25 gebildet und/oder starr hiermit verbunden und weist eine Wannenform auf, die den unteren Teil der Dosierwalze 22 umgibt. In Fig. 2 ist ein Begrenzungsabschnittswinkel 56 gezeigt, der sich über einen Bereich von insbesondere größer 90° und/oder kleiner 180° erstreckt. Der Begrenzungsabschnitt 54 ist in radialer Richtung von einem Außenumfang der Dosierwalze 22 beabstandet, wie es in Fig. 2 bei A angedeutet ist. Der Abstand A ist klein im Vergleich zu den Abmessungen der Umfangsnuten 52, ist jedoch vorzugsweise größer als die maximale Partikelgröße des Schüttguts 36.

Der Begrenzungsabschnitt erstreckt sich von einem Bereich benachbart zu dem Grobstromauslass 38 wannenförmig hin zu einer Seitenwand des Dosiereinrichtungsgehäuses 25. In der Schüttgutaufnahme 24 vorhandenes Schüttgut wird bei einer Drehung der Dosierwalze 22 in der bevorzugten Drehrichtung 34 aus einem Bereich benachbart zu dem Grobstromauslass 38 in Richtung hin zu einer Unterseite der Dosierwalze 22 gefördert. In der Schüttgutaufnahme 24 enthaltenes Schüttgut wird dabei in den Umfangsnuten 52 aufgenommen und begrenzt durch den Begrenzungsabschnitt 54 in Umfangsrichtung gefördert. Im Bereich einer Unterseite der Dosierwalze 22 ist eine Abstreifeinrichtung 58 ausgebildet, die in den Umfangsnuten 52 enthaltenes Schüttgut aus den Umfangsnuten 52 abstreift und dem Feinstromauslass 44 zuführt.

In Fig. 2 ist ferner zu erkennen, dass der Dosiereinrichtung 20 ein Räummechanismus 60 zugeordnet ist, auf dessen Funktion nachstehend noch eingegangen werden wird. Ferner kann der Dosiereinrichtung 20 eine Rütteleinrichtung 61 zugeordnet sein, auf die nachfolgend ebenfalls noch eingegangen wird.

Wie es sich aus der Längsschnittansicht der Fig. 3 ergibt, weist die Dosierwalze 22 eine Mehrzahl von vorliegend etwa zwölf Umfangsnuten 52 auf, zwischen denen jeweilige Umfangsstege 62 ausgebildet sind.

Fig. 3 zeigt ferner, dass die Abstreifeinrichtung 58 eine Mehrzahl von Abstreifzinken 64 aufweist, die in die Umfangsnuten 52 greifen, um darin befindliches Schüttgut abzustreifen und dem Feinstromauslass 44 zuzuführen.

Die Umfangsstege 62 weisen über den Umfang verteilt eine Vielzahl von Fördervertiefungen 66 auf, zwischen denen jeweilige Fördernocken 68 ausgebildet sind. Dies ist in Fig. 3 und 4 zu erkennen. Die radiale Tiefe der Fördervertiefungen 66 entspricht dabei der radialen Tiefe der Umfangsnuten 52. Die Fördervertiefungen 66 von einander benachbarten Umfangsstegen 62 sind in Umfangsrichtung gegeneinander versetzt, derart, dass die Fördervertiefungen 66 eines Umfangssteges in Umfangsrichtung ausgerichtet sind mit Fördernocken 68 von unmittelbar benachbarten Umfangsstegen 62. Hierdurch ergibt sich in der Draufsicht, wie es insbesondere in Fig. 3 zu erkennen ist, eine Gestalt, bei der in einer axialen Richtung hintereinander folgende Elemente angeordnet sind: Umfangsnut, Fördernocken, Umfangsnut, Fördervertiefung, Umfangsnut, Fördernocken, usw..

In Fig. 3 ist ferner schematisch eine Ausführungsform eines Räummechanismus 60 angedeutet, der beispielhaft zwei Räumzinken 70 aufweist, die axial ausgerichtet sind und die gemeinsam einen Räumkamm bilden können. In Fig. 3 ist ferner angedeutet, dass zum Räumen die Dosierwalze 22 kontinuierlich angetrieben werden kann, wobei der Räummechanismus 60 eine axiale Hin- und Herbewegung vollzieht, so dass von einem Räumzinken 70 die Fördervertiefungen 66 von zwei Umfangsstegen 62 geräumt werden können, die benachbart zu einer Umfangsnut 52 sind. Durch die axiale Hin- und Herbewegung ergibt sich in Kombination mit dem kontinuierlichen Antrieb der Dosierwalze 22 eine schlangen- bzw. sinusförmige Bewegung, deren Amplitudenspitzen in Fördervertiefungen 66 von benachbarten Umfangsstegen 62 liegen.

Wie es in Fig. 2 dargestellt ist, kann der Räummechanismus in einem Bereich außerhalb des Begrenzungsabschnittswinkels 56 angeordnet sein, d.h. außerhalb des Begrenzungsabschnittes 54. Bevorzugt ist der Räummechanismus 60 jedoch, wie es in Fig. 2 bei 60A angedeutet ist, innerhalb des Begrenzungsabschnittes 54 angeordnet, und zwar in Förderrichtung der Dosierwalze 22 vorzugsweise vor der Abstreifeinrichtung 58. Ferner ist es bevorzugt, wenn der Räummechanismus 60A so angeordnet ist, dass von dem Räummechanismus 60A aus der Dosierwalze 22 entferntes Schüttgut 36 dem Feinstromauslass 44 zugeführt wird.

Die Rütteleinrichtung 61, die oben erwähnt wurde, kann dazu verwendet werden, um an der Dosierwalze 22 und/oder an Wandungen der Schüttgutaufnahme 24 anhaftendes Schüttgut zu lösen. In einer Ausführungsform kann die Rütteleinrichtung 61 durch eine spezielle Form des Antriebs der Dosierwalze 22 gelöst werden, nämlich indem diese relativ hochfrequent vor- und zurückgedreht wird, so dass eine Art Vibration entsteht.

Im Betrieb wird Schüttgut 36 in die Schüttgutaufnahme 24 gefüllt. Anschließend wird der Grobstromauslass 38 geöffnet, so dass Schüttgut mit einer hohen Dosierleistung in einen darunter befindlichen Behälter (Sack 16 in Fig. 1 und 2) gefüllt wird. Sobald die Befüllung ein bestimmtes Niveau überschritten hat (beispielsweise 80 oder 90 % der gewünschten Füllmenge bzw. des gewünschten Füllgewichtes), wird der Grobstromauslass 38 geschlossen. Anschließend wird der Feinstromauslass 44 geöffnet und die Förderwalze 22 wird in der Drehrichtung 34 angetrieben. Hierdurch wird Schüttgut, das sich in der Schüttgutaufnahme 24 aufstaut, insbesondere aufgrund des geschlossenen Grobstromauslasses 38, in die Umfangsnut 52 und in die Fördervertiefungen 66 hineingebracht und dann im Bereich des Begrenzungsabschnittes 54 gezielt hin zu der Abstreifeinrichtung 58 gefördert, wo das Schüttgut aus den Umfangsnuten 52 abgestreift wird und dem Feinstromauslass 44 zugeführt wird.

Die Zufuhr an Schüttgut erfolgt dabei nach der Art einer Feindosierung, wobei die Drehzahl bzw. Drehgeschwindigkeit der Dosierwalze 22 als eine Funktion des erfassten Füllgewichtes in den Behälter bzw. Sack 16 angepasst wird.

Es versteht sich, dass während der Grobdosierung auch die Dosierwalze 22 bereits angetrieben sein kann und der Feinstromauslass 44 ebenfalls bereits geöffnet sein kann.

## Patentansprüche

1. Dosiereinrichtung (20) zum Dosieren von Schüttgut (36), insbesondere für eine Waagenanordnung (10), mit
- einem Dosiereinrichtungsgehäuse (25);
- einer Dosierwalze (22), die drehbar an dem Dosiereinrichtungsgehäuse (25) gelagert und in wenigstens einer Drehrichtung (34) antreibbar ist,
- einem Begrenzungsabschnitt (54), der die Dosierwalze (22) zumindest teilweise umgibt und an dem ein Schüttgutauslass (44) ausgebildet ist,
wobei die Dosierwalze (22) eine Mehrzahl von Umfangsnuten (52) aufweist, wobei zwischen zwei Umfangsnuten (52) ein Umfangssteg (62) ausgebildet ist, **dadurch gekennzeichnet, dass**
wubeidie Dosierwalze (22) an ihrer dem Begrenzungsabschnitt (54) zuweisenden Oberfläche einstückig ausgebildet ist, so dass vermieden werden kann, dass Teile der Dosierwalze (22) in das dosierte Schüttgut gelangen.

2. Dosiereinrichtung nach Anspruch 1, wobei an dem Umfangssteg (62) eine Vielzahl von über einen Umfangsabschnitt der Dosierwalze (22) verteilt angeordneten Fördermerkmalen (66) ausgebildet ist, und
wobei die über den Umfangsabschnitt des Dosierwalze (22) verteilt angeordneten Fördermerkmale (66) eines ersten und eines zweiten axial benachbarten Umfangsstegs (62) in Umfangsrichtung versetzt zueinander angeordnet sind.

3. Dosiereinrichtung nach Anspruch 2, wobei die Fördermerkmale (66) durch eine Mehrzahl von über den Umfangsabschnitt der Dosierwalze (22) verteilt angeordneten radialen Fördervertiefungen ausgebildet sind, zwischen denen jeweils Fördernocken (68) ausgebildet sind.

4. Dosiereinrichtung nach Anspruch 3, wobei die Fördervertiefungen (66) des ersten Umfangsstegs in Umfangsrichtung mit Fördernocken (68) des zweiten Umfangsstegs ausgerichtet sind.

5. Dosiereinrichtung nach einem der Ansprüche 3 - 4, wobei eine radiale Tiefe der Fördervertiefungen (66) einer radialen Tiefe der Umfangsnuten (52) entspricht.

6. Dosiereinrichtung nach einem der Ansprüche 1 - 5, wobei an dem Begrenzungsabschnitt (54) eine Abstreifeinrichtung (58) angeordnet ist, die dazu ausgebildet ist, Schüttgut (36) aus wenigstens einer Umfangsnut (52) abzustreifen, so dass es dem Schüttgutauslass (44) zugeführt wird.

7. Dosiereinrichtung nach Anspruch 6, wobei die Abstreifeinrichtung (58) wenigstens einen Abstreifzinken (64) aufweist, der in die Umfangsnut eingreift.

8. Dosiereinrichtung nach einem der Ansprüche 2 - 7, wobei der Dosierwalze (22) ein Räummechanismus (60) zugeordnet ist, der dazu ausgebildet ist, Schüttgut (36) aus den Fördermerkmalen (66) zu entfernen.

9. Dosiereinrichtung nach Anspruch 8, wobei der Räummechanismus (60) synchron zu einer Verdrehung der Dosierwalze angesteuert ist.

10. Dosiereinrichtung nach einem der Ansprüche 1 - 9, wobei das Schüttgut (36) eine maximale Partikelgröße aufweist, wobei ein Abstand (A) zwischen dem Begrenzungsabschnitt (54) und einem Außenumfang der Dosierwalze (22) größer ist als die maximale Partikelgröße.

11. Dosiereinrichtung nach einem der Ansprüche 1 - 10, wobei eine Drehzahl der Dosierwalze (22) variabel einstellbar ist, insbesondere automatisiert einstellbar ist, und vorzugsweise als eine Funktion eines Gewichtes und/oder einer Menge an dosiertem Schüttgut (36) einstellbar ist.

12. Dosiereinrichtung nach einem der Ansprüche 1 - 11, wobei das Dosiereinrichtungsgehäuse (25) einen weiteren Schüttgutauslass (38) aufweist, über den Schüttgut (36) unter Umgehung der Dosierwalze (22) und des Begrenzungsabschnittes (54) gesteuert abgebbar ist.

13. Dosiereinrichtung nach einem der Ansprüche 1 - 12, wobei eine Rütteleinrichtung (61) dazu ausgebildet ist, Schüttgut (36) von der Dosierwalze (22) zu lösen.

14. Waagenanordnung (10) mit einer Dosiereinrichtung (20) nach einem der Ansprüche 1 - 13, wobei die Dosierwalze (22) und der Begrenzungsabschnitt (54) vorzugsweise in einem Schüttgutaufnahmeraum (24) angeordnet sind.

15. Verfahren zum Dosieren von Schüttgut mittels einer Dosiereinrichtung (20) nach einem der Ansprüche 1 - 13, mit dem Schritt, die Dosierwalze (22) in Bezug auf den Begrenzungsabschnitt (54) zu verdrehen, so dass Schüttgut (36) in Richtung hin zu dem Schüttgutauslass (44) gefördert wird.

## Claims

1. Dosing device (20) for dosing bulk material (36), particularly for a scale arrangement (10), comprising
- a dosing device housing (25);
- a dosing roller (22) which is rotatably mounted on the dosing device housing (25) and which is drivable in at least one direction (34) of rotation,
- a boundary portion (54) which at least partially surrounds the dosing roller (22) and on which a bulk material outlet (44) is formed,
wherein the dosing roller (22) has a plurality of circumferential grooves (52), wherein a circumferential web (62) is formed between two circumferential grooves (52),
**characterized in that**
the dosing roller (22) is formed in one piece on its surface facing the boundary portion (54) so that it can be avoided that parts of the dosing roller (22) get into the dosed bulk material.

2. Dosing device according to claim 1, wherein on the circumferential web (62), a plurality of conveying features (66) which are distributed over a circumferential portion of the dosing roller (22), are formed, and
wherein the conveying features which are distributed over the circumferential portion of the dosing roller (22), of a first and a second axially adjacent circumferential web (62) are offset with respect to each other in the circumferential direction.

3. Dosing device according to claim 2, wherein the conveying features (66) are formed by a plurality of radial conveying recesses which are distributed over the circumferential portion of the dosing roller (22), wherein conveying cams (68) are respectively formed between the conveying recesses.

4. Dosing device according to claim 3, wherein the conveying recesses (66) of the first circumferential web are aligned in the circumferential direction with conveying cams (68) of the second circumferential web.

5. Dosing device according to any of claims 3 to 4, wherein a radial depth of the conveying recesses (66) corresponds to a radial depth of the circumferential grooves (52).

6. Dosing device according to any one of claims 1 to 5, wherein a scraper device (58) is arranged at the boundary portion (54), wherein the scraper device (58) is designed to scrape bulk material (36) from at least one circumferential groove (52), so that it can be conveyed to the bulk material outlet (44).

7. Dosing device according to claim 6, wherein the scraper device (58) comprises at least one scraper tine (64) which engages in the circumferential groove.

8. Dosing device according to any one of claims 2 to 7, wherein a clearing mechanism (60) is associated with the dosing roller (22), which is designed to clear bulk material (36) from the conveying features (66).

9. Dosing device according to claim 8, wherein the clearing mechanism (60) is driven synchronously to a rotation of the dosing roller.

10. Dosing device according to any one of claims 1 to 9, wherein the bulk material (36) has a maximum particle size, wherein a distance (A) between the boundary portion (54) and an outer circumference of the dosing roller (22) is greater than the maximum particle size.

11. Dosing device according to any one of claims 1 to 10, wherein a rotational speed of the dosing roller (22) is variably adjustable, particularly automatically adjustable, and is preferably adjustable as a function of a weight and/or a quantity of dosed bulk material (36).

12. Dosing device according to any one of claims 1 to 11, wherein the dosing device housing (25) comprises another bulk material outlet (38), via which bulk material (36) can be discharged in a controlled manner while bypassing the dosing roller (22) and the boundary portion (54).

13. Dosing device according to any one of claims 1 to 12, wherein a vibrating device (61) is designed to release bulk material (36) from the dosing roller (22).

14. Scale arrangement (10) having a dosing device (20) according to any one of claims 1 to 13, wherein the dosing roller (22) and the boundary portion (54) are preferably arranged in a bulk material receiving space (24).

15. Method of dosing bulk material by means of a dosing device (20) according to any one of claims 1 to 13, comprising the step of rotating the dosing roller (22) with respect to the boundary portion (54) so that bulk material (36) is conveyed in a direction towards the bulk material outlet (44).

## Revendications

1. Dispositif de dosage (20) pour le dosage d'un produit en vrac (36), notamment pour un agencement de balance (10), avec
- un boîtier de dispositif de dosage (25) ;
- un rouleau de dosage (22) qui est monté rotatif sur le boîtier de dispositif de dosage (25) et peut être entraîné dans au moins une direction de rotation (34),
- une section de délimitation (54) qui entoure au moins partiellement le rouleau de dosage (22) et sur laquelle est réalisée une sortie de produit en vrac (44),
le rouleau de dosage (22) présentant une pluralité de rainures périphériques (52), une nervure périphérique (62) étant réalisée entre deux rainures périphériques (52), **caractérisé en ce que**
le rouleau de dosage (22) est réalisé d'une seule pièce sur sa surface orientée vers la section de délimitation (54), de telle sorte qu'il est possible d'éviter que des parties du rouleau de dosage (22) parviennent dans le produit en vrac dosé.

2. Dispositif de dosage selon la revendication 1, dans lequel une pluralité de caractéristiques de transport (66) réparties sur une section périphérique du rouleau de dosage (22) sont réalisées sur la nervure périphérique (62), et
dans lequel les caractéristiques de transport (66) d'une première et d'une deuxième nervure périphérique (62) axialement voisines, réparties sur la section périphérique du rouleau de dosage (22), sont agencées en décalage l'une par rapport à l'autre dans la direction périphérique.

3. Dispositif de dosage selon la revendication 2, dans lequel les caractéristiques de transport (66) sont réalisées par une pluralité de creux de transport radiaux répartis sur la section périphérique du rouleau de dosage (22), entre lesquels sont réalisées respectivement des cames de transport (68).

4. Dispositif de dosage selon la revendication 3, dans lequel les creux de transport (66) de la première nervure périphérique sont alignés dans la direction périphérique avec des cames de transport (68) de la deuxième nervure périphérique.

5. Dispositif de dosage selon l'une quelconque des revendications 3 à 4, dans lequel une profondeur radiale des creux de transport (66) correspond à une profondeur radiale des rainures périphériques (52).

6. Dispositif de dosage selon l'une quelconque des revendications 1 à 5, dans lequel un dispositif de raclage (58) est agencé sur la section de délimitation (54), lequel est réalisé pour racler le produit en vrac (36) d'au moins une rainure périphérique (52), de telle sorte qu'il est acheminé vers la sortie de produit en vrac (44).

7. Dispositif de dosage selon la revendication 6, dans lequel le dispositif de raclage (58) présente au moins une dent de raclage (64) qui s'engage dans la rainure périphérique.

8. Dispositif de dosage selon l'une quelconque des revendications 2 à 7, dans lequel le rouleau de dosage (22) est associé à un mécanisme de dégagement (60) qui est réalisé pour évacuer le produit en vrac (36) des caractéristiques de transport (66).

9. Dispositif de dosage selon la revendication 8, dans lequel le mécanisme de dégagement (60) est commandé de manière synchrone avec une rotation du rouleau de dosage.

10. Dispositif de dosage selon l'une quelconque des revendications 1 à 9, dans lequel le produit en vrac (36) présente une taille de particule maximale, une distance (A) entre la section de délimitation (54) et une périphérie extérieure du rouleau de dosage (22) étant supérieure à la taille de particule maximale.

11. Dispositif de dosage selon l'une quelconque des revendications 1 à 10, dans lequel une vitesse de rotation du rouleau de dosage (22) est réglable de manière variable, notamment est réglable de manière automatisée, et est de préférence réglable en fonction d'un poids et/ou d'une quantité de produit en vrac dosé (36).

12. Dispositif de dosage selon l'une quelconque des revendications 1 à 11, dans lequel le boîtier de dispositif de dosage (25) présente une autre sortie de produit en vrac (38), par l'intermédiaire de laquelle le produit en vrac (36) peut être distribué de manière commandée en contournant le rouleau de dosage (22) et la section de délimitation (54).

13. Dispositif de dosage selon l'une quelconque des revendications 1 à 12, dans lequel un dispositif vibrant (61) est réalisé pour détacher le produit en vrac (36) du rouleau de dosage (22).

14. Agencement de balance (10) avec un dispositif de dosage (20) selon l'une quelconque des revendications 1 à 13, dans lequel le rouleau de dosage (22) et la section de délimitation (54) sont de préférence agencés dans un espace de réception de produit en vrac (24).

15. Procédé de dosage d'un produit en vrac au moyen d'un dispositif de dosage (20) selon l'une quelconque des revendications 1 à 13, comprenant l'étape consistant à faire tourner le rouleau de dosage (22) par rapport à la partie de délimitation (54), de telle sorte que le produit en vrac (36) est transporté en direction de la sortie de produit en vrac (44).
